# EUROPEAN PATENT APPLICATION

(11) **EP 1 014 262 A2**
(43) Date of publication of application: **28.06.2000**
(21) Application number: 99650034.4
(22) Date of filing: 14.04.1999
(51) Int. Cl.: G06F 9/44

(54) **Localization of software products**

(30) Priority: 21.12.1998 IE 981076
(71) Applicant: Transware Development Limited, Dublin 14 (IE)
(72) Inventor: Markham-Cooke, Roisin, Rathfarnham, Dublin 16 (IE); McCutcheon, Oonagh, Blackrock, County Dublin (IE); Mullan, Bill, Dublin 6 (IE); McBrien, Kieran J., Dublin 14 (IE)
(74) Representative: Weldon, Michael James

(57) **Abstract**

A localization process which is particularly suitable for source products which include electronic images captured from foreign sources and are graphics-intensive. In a project evaluation phase (2) the extent of localization effort is estimated and text and graphic files are prepared. In a screen shooting step (3) screens from a local source are captured. In a graphics processing step (5) screen shots are superimposed on a blank file and edited graphics are in turn superimposed on the screen shots. Translation is performed in a separate part of the process and the output from translation is used for both screen shooting and graphics processing. In a technical integration step (6) text files, final graphics files, and generic program code is integrated and tested.

## Description

### INTRODUCTION

### Field of the Invention

The invention relates to localisation of software products, particularly interactive education, multimedia, and publishing products.

### Prior Art Discussion

The market for software products is expanding at a dramatic rate, however, one of the major obstacles is localization of the products to allow for cultural differences. One approach which is sometimes appropriate is simultaneous storage of messages in different languages, as described in US 5146587 (Pitney Bowes). However, this approach is effective only for relatively small levels of natural language text such as error messages. Most software products include large quantities of text and therefore this approach is generally not feasible. Therefore, the approach has been to develop a source language product ("source product") and to localize this product to produce a number of localized target-language products ("target products"). Each target product is specific to a particular language.

US 5201042 (Hewlett Packard) describes an apparatus for use in such localization. The apparatus has a source file with format instructions, words to be translated, and contextual information. A translation tool selects and displays the words in a format to assist translation taking context into account. US 5416903 (IBM) describes a method whereby a file is separated into language-dependant and language-independent files and information is provided to assist the translator. US4870610 (Bell) describes a system which produces an auxiliary image which is modified to create a translated image. Mapping relationships between first and second language screens are used and the original image and the translated image are processed to generate a data file. In US4864503 (Toltran) a system translates into a universal intermediate international language by parsing and tagging. In US5251130 (IBM) an operator invokes a contextual translation procedure for displayed screens during execution of interactive software.

These systems appear to reduce the effort required for various aspects of localization and introduce a certain degree of automation and contextual assistance for the translator. However, there is still a need to provide for increased efficiency in the complete localization process, particularly where the source product is interactive and has a large number of display images for user interactivity. There is also a need to improve consistency of quality in image processing of target products, and particularly interactive target products.

### Objects of the Invention

One object is to achieve localization of software products in a more efficient manner.

Another object is to produce target products which consistently reach the quality level of the source products. This object also extends to providing feedback to the source product producers to improve the methodology and cause the source product to be more readily localized. Therefore, achievement of this object would bring the localization process back into the basic production loop, rather than it being regarded as a separate translation function divorced from source product production.

### SUMMARY OF THE INVENTION

According to the invention, there is provided a process for localizing a software source product to produce a target product, the process comprising the steps of:-
in an evaluation phase, generating text files which include only text strings of the source product, and generating graphics files which include graphic components of the source product and which have embedded text;
in a translation phase, translating the text files and text in the graphics files which were generated in the evaluation phase;
in a screen shooting phase, a workstation capturing images from a local source from the same language and cultural environment as the target product;
in a graphics processing stage editing graphics of the source product with reference to the translated graphics files, and superimposing edited graphics on corresponding screen shots to produce final graphics files; and
in a technical integration phase, constructing and integrating the final graphics files, the translated text files, and generic program code for the source and target products to produce a target product.

In one embodiment, the source product is executed in a design mode in which file names and sequencing information for screens is automatically displayed.

In another embodiment, the evaluation phase includes the additional steps of automatically carrying out a word count for text in the source product, automatically determining re-use of phrases, generating translation requirement data, and writing evaluation data to an evaluation data file.

Preferably, the evaluation phase includes the additional step of generating a storage structure for a server connected to the evaluation, screen shooting, graphics processing and technical integration workstations, the storage structure including a section for all target products of a particular language, and separate sections associated with phases of the process.

In one embodiment, the evaluation phase includes the additional step of automatically evaluating audio and video content of the source product to determine the extent of language spoken as a word count and a real time duration, and writing the audio and video data to an evaluation data file.

Preferably, the technical integration phase includes a separate method for processing simulation programs of the source product, in which local source screens which correspond to simulation screens are shot, edited, and executed for quality control.

In one embodiment, the technical integration phase includes the step of automatically validating graphics and screen files by searching through the target product code. identifying references to screens and graphics, and determining if they exist in a storage structure section for the target product.

In another embodiment, the technical integration phase includes the steps of executing the target product in a design mode and editing graphics which have inconsistencies as they appear on the screen.

In a further embodiment, the technical integration phase includes the additional steps of performing a quality assurance analysis before final target product sign-off.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig.1 is an overview flow diagram of the process;
Figs. 2(a) and 2(b) are flow diagrams illustrating evaluation, screen shooting, and graphics processing steps;
Fig. 3 is a flow chart showing technical integration:
Fig. 4 is a representation of an art sample file:
Fig. 5 is a representation of an interim graphics processing file, and Fig. 6 is a representation of a final graphics file; and
Fig. 7 is a representation of a series of two simulation screens.

### Detailed Description of the Embodiments

The localization process of the invention is carried out by a production system having a LAN, a set of workstations, and a production control server.

The production control server has a storage structure for storing the following production directories or folders.
- project evaluation,
- target languages ― one per language,
- source language ― one per language
- screen shooting,
- graphics processing, and
- technical integration.
- quality assurance.

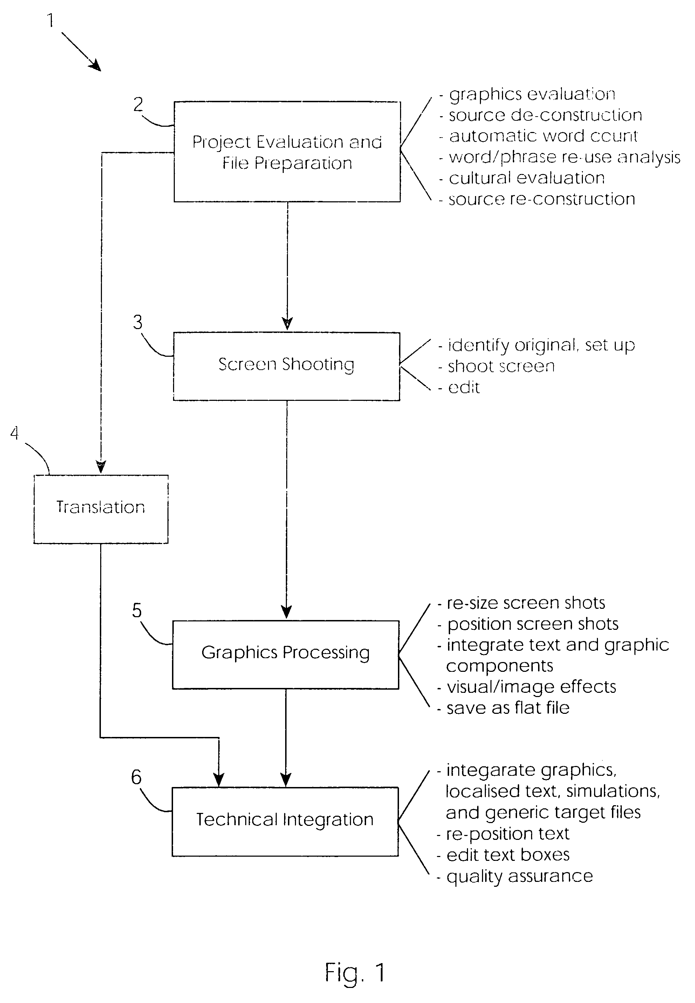

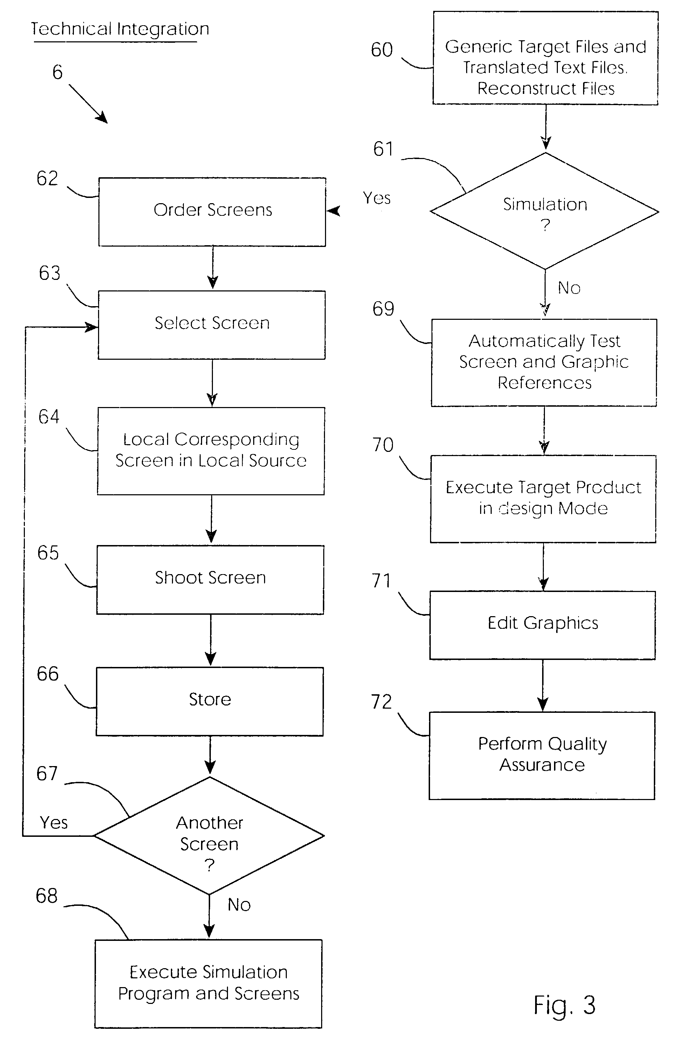

The process is now described with reference to the flow charts of Figs. 1, 2, and 3 in which the complete process is indicated by the numeral 1.

### Project Evaluation and File Preparation

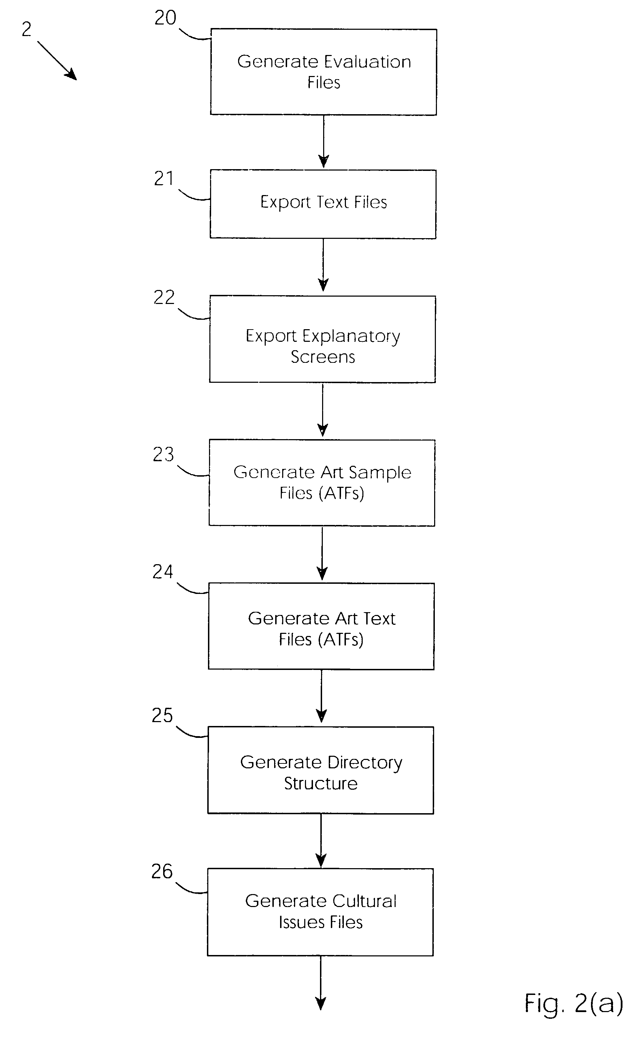

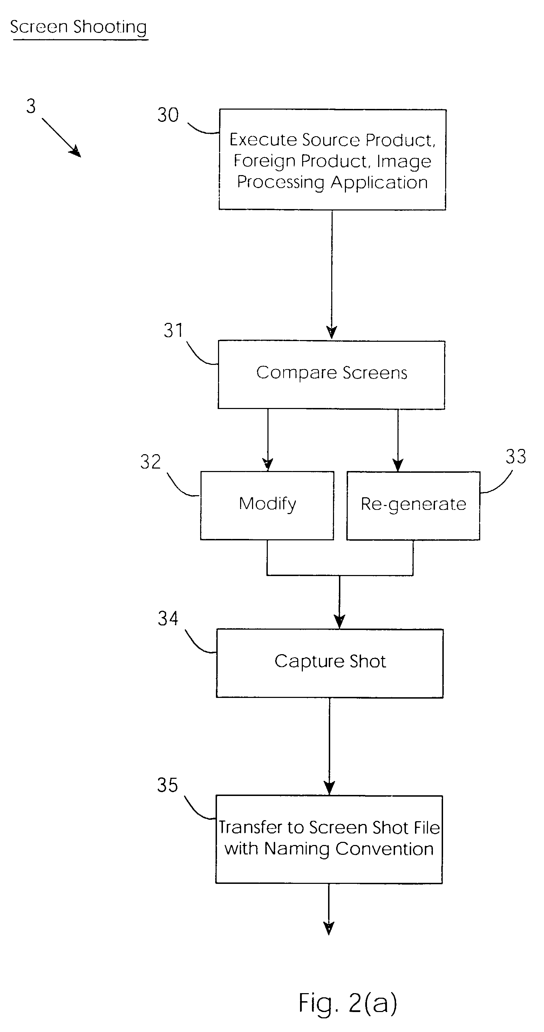

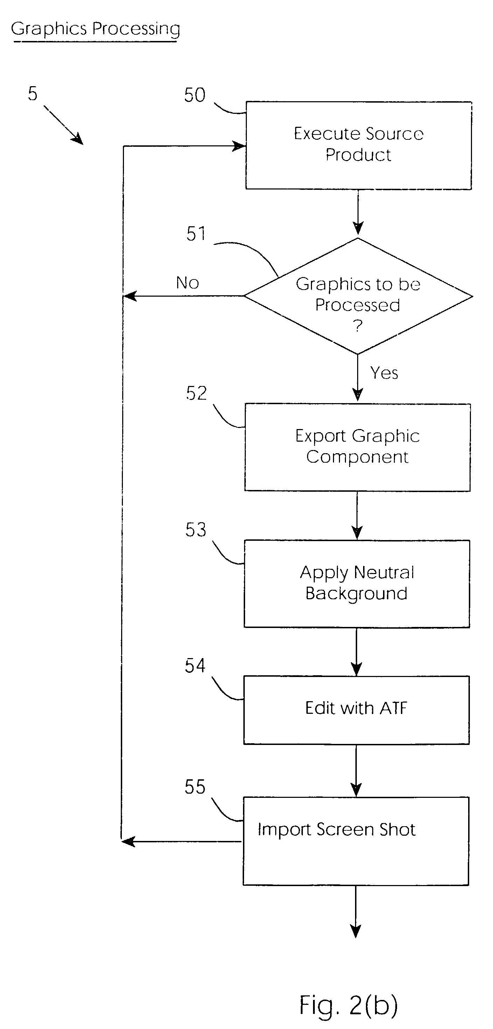

The first step is indicated by the numeral 2, and it involves project evaluation. It involves an automatic word count with analysis of word/phrase repetition to provide a proportion for word re-use. The count is in text files which have been automatically converted to "Rich Text" format, and the results are written to a mapped memory section for export to a translation facility. There is one mapped section of memory for each language and each product. The files thus generated are referred to as evaluation data files, as referred to in step 20 of Fig. 2(a).

In step 21, evaluation involves exporting text files, which are part of the source product, for translation at a translation facility. Explanatory screens for user assistance are exported in step 22.

In step 23 Art Sample Files (ASFs) are generated. These are screens captured from the source product and which contain graphics with embedded text.

Words which are embedded in graphics and which will need to be translated are captured in Art Text Files (ATFs) in step 24. The graphics are in a graphic file format and so are easily accessible. An operator views each graphic in succession and enters the words to be translated into the ATF in spreadsheet format. The entry includes screen and graphic codes of the source product.

The source product may include graphics which are imported from a foreign source. For example, if the source product is an educational software application, it may include live examples from the application. The target product would thus require screens imported from the corresponding application in its language. This requires screen shooting and in the evaluation phase the number of screen shots required is evaluated.

A directory structure on the disk drive of the localization system is created. The main folder is the source product title, and a subfolder is created for screen shots, and further subfolders for kits. A translation kit is a set of files generated for export to a translation facility. A kit includes ASFs, ATFs, the text files, the explanatory screens, and the evaluation data files. There is one kit for each source product.

In a second phase of evaluation, there is a general cultural evaluation. This includes an analysis of symbols representing information and their relevance to the target country or language. It also involves a general evaluation to determine how the text files, background effects, screen shots, and graphics are contained within the course. The screen shots are also reviewed to determine the complexity and extent of any brushes or platforms, the difficulty of editing other graphic effects, and the extent of art text. At this stage there is an estimation of the expected daily number of finished translated files which can be expected.

Finally, there is a comprehensive overview of the source product as a whole. Currency, dates, times, maps, flags or any other geographical references are flagged. The screens showing these potential issues are captured. The source product is checked for any other cultural issues which could change and notes are made in a project control table and in evaluation data files.

The source product is checked for pallette flashes, plotting problems, missing screens, missing spellings or any other technical problem which the producer of the source product should be aware of. The screens showing these potential issues are captured. The output of the second evaluation phase is written in step 26 to a cultural issues file.

If the source product has an audio or video output, all audio and video files are isolated and the file name and disk locations are listed. A note is made of the gender, age, and character of the actor's voice. This information may be guessed, or it may be determined more accurately if video files were also included. There is a count of words in the audio files which must be translated. If no accompanying text files exist, the word count can be achieved by estimating the average word count per minute spoken by the actor and multiplying this by the real time. The following information is recorded for audio content of the source product.
- Real time duration.
- The file text word count.
- The file title.
- Location and name.
- The file technical format.
- The list of actors and the list of characters made by actors.

In step 4, the kit which has been prepared in step 2 is processed. The text is translated, edited, and quality assured. Translation is performed, taking not only literal translations of words into account, but also cultural issues which arise and the context of the source product. The translator performs this task by also executing the source product.

### Screen Shooting

Screen shots are taken where the target product requires electronic images from sources other than the source product.

For example, for a computer based training product for teaching a user how to use Word 97™, the source product includes live examples of how to execute certain commands. In the target product, the same principle applies. However, if, for example, the target product is for the French-speaking market, the target product must include electronic captured images (screen shots) from French Word 97™. The screen shots to be taken are identified by executing the source product in development mode.

For screen shooting, the computer being used must be set up and running in a localized environment. For example, if the target product is for the French-speaking market, then the workstation must be running with an entirely French operating system. The screen shooting workstation operates according to an editing application for pasting and editing the screen shots, and a word processing application. The workstation also executes applications for decompression and quality assurance of the shots. The workstation is set with the correct regional settings for the target product. For example, in English a decimal point uses the full stop symbol, whereas in Brazilian Portuguese a comma is used for that purpose.

The source product is executed and reviewed thoroughly by the screen shooter. Execution is in a development environment which allows the screen shooter to execute the source product in design mode to enable speedy navigation and to avoid needing to do such things as complete simulation. The design mode also allows the screen shooter to view at any time the graphic number for which the screen shot is a component. These numbers are called GIF numbers. Using the GIF numbers, the screen shooter makes a list of all of the shots which are to be taken for the target product, and groups them into various units. The GIF numbers are used as a way of monitoring progress of screen shooting and are used by all personnel involved in localizing the product. The screen shooter uses the directory set up during the evaluation stage for file capture and storage.

In summary, as set out in Fig. 2 in step 30, the screen shooting workstation executes the source product, the foreign product which is the source for the required screen shots, and an image processing application such as Paint Shop Pro™.

In step 31, the screen shooter compares screens of the source and foreign products. The object is to replicate the process which is being described in the source product to the live localized target product. This is indicated in step 32 and may involve adding text to the shot, pressing radio buttons, or highlighting options in a drop down menu. Most of the necessary modifications can be made at this stage. When the screen shooter is satisfied that the screen represents the source product, then it can be captured. This step is critical in ensuring high quality of the target product. Capturing is very simple as it is performed simply by pressing the "Print Screen" function key on IBM compatible PCs. This transfers the image to the image processing application.

If there are a number of similar shots in succession, it is important that they flow from one to the other smoothly to avoid visual "jumps". This is also critical for quality of the target product. An example of where this situation arises is where a first shot shows a blank document such as a Word™ document and the next shot shows the same document with a drop-down menu selected. In this case, the screen shooter takes a shot of the first document, saves it, and saves it again as the next shot pasting on the menu selected afterwards. In this way, it will not be possible that the screen will jump between shots.

Attention to detail is important to ensure that the captured shot is as close as possible to that in the source product. For example, if the buttons are to be depressed/selected/greyed out, then they should appear like this in the target product. To show a pressed button, the button in the application from which the shot is being taken is depressed and the captured shot is then processed in a graphics application. This may involve cropping the shot to allow a space for a title bar at the top of the screen in the target product. For example, the shot may be captured at 640 x 640 pixels and it must be cropped down to a smaller size as required.

An important aspect of screen shooting is that the screen shooter endeavours to exactly replicate the source shot using the target software. However, from time to time it is not possible to match the requirements exactly and some editing is required after capturing. For example, if the source product is a Word™ training course, it may refer to a grammar checker which is actually not available in the version of Word for the target product. Such complications are logged to a database, which is referred to by other people involved in the localization process. This entry includes the title of the source product. the language, the number of the particular shot, and a brief explanation of why a shot or part of a shot is missing.

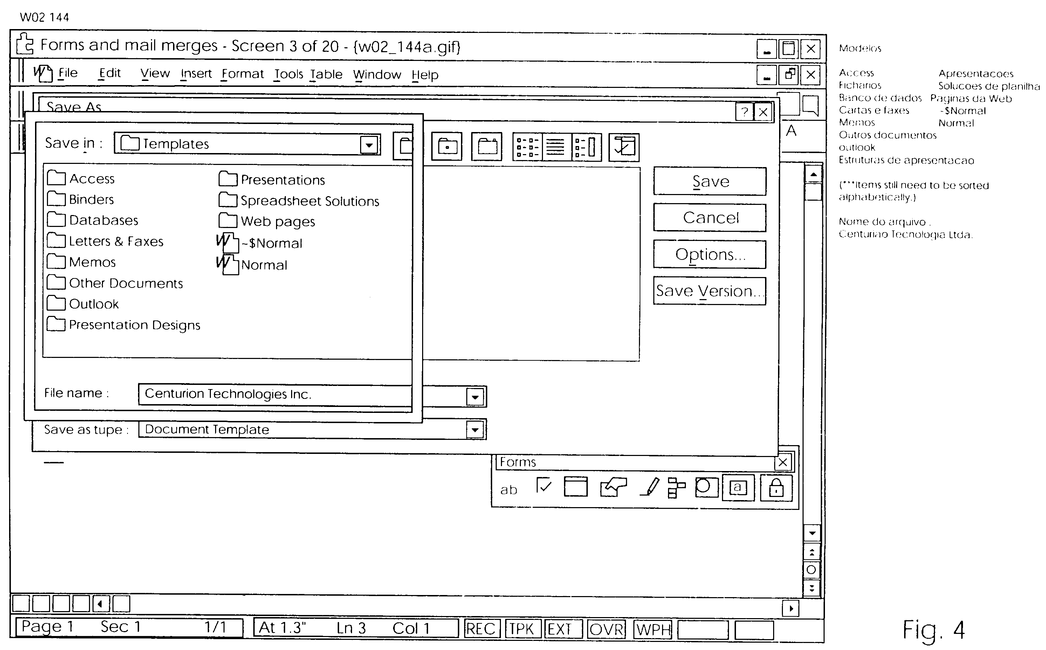

More comprehensive editing to ensure that the shots are identical involve "mocking" in step 33. This may involve pasting pieces of shots together, or adding text manually. This is necessary for technical reasons when the shot is dependent on system hardware of software unavailable in the target country. When mocking text, it is very important to copy and paste from Art Sample Files supplied by the translation facility. An example is shown in Fig. 4. ASFs are used where the source product includes interactivity. In the example illustrated, the interactivity relates to an electronic mail program.

A screen is shot in step 34, and saved in step 35. When saving the screen shots, the directory structure referred to above is used. The following is an example of the GIF number which appears in the title bar of the source product.
Getting started - Screen 2 of 8- {b01_128.gif}

Quality control of screen shooting involves the following items:-
Checking that buttons are depressed/selected/greyed out when necessary.
Checking that the task bar reflects the source language exactly.
Checking that all icons are identical in the tool bar.
Checking that the colours are identical to that of the source product.
Checking language and culture-specific formats such as dates, currencies, addresses, and names.
Ensuring that replacement of dialogue boxes on screen is consistent.
Checking that lists of names are in alphabetical order where applicable.
Checking that the shot has been cropped.

### Graphics Processing

The inputs for the graphics processing step 5 are the ATFs and the explanatory screen generated during the evaluation phase 2 in step 50.

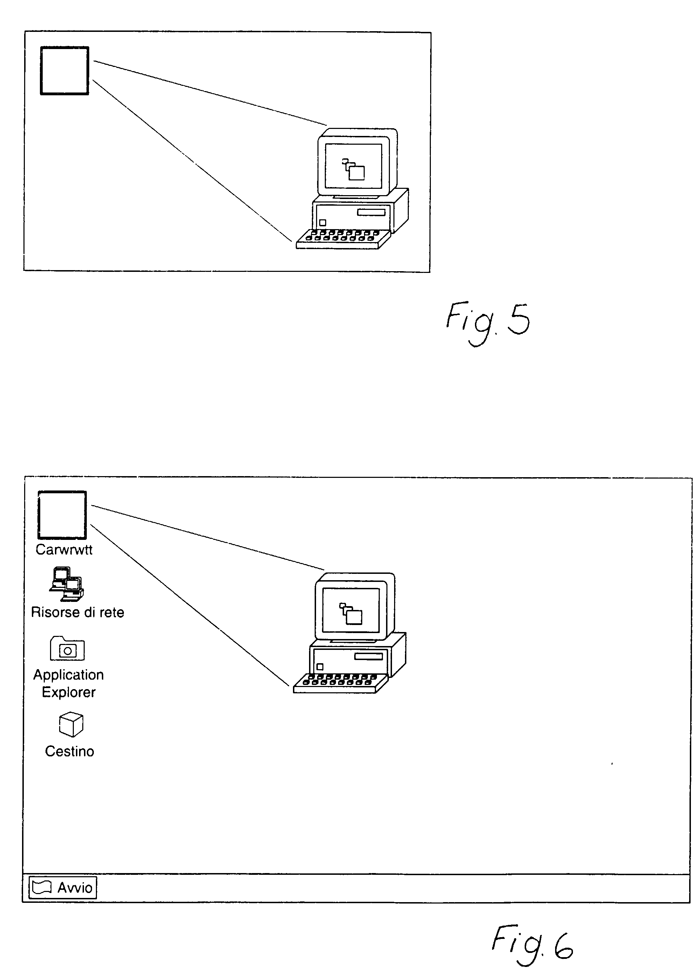

The graphics artist views each screen of the source product while it executes in design mode. When a screen is encountered which needs to be localized, as indicated by step 51 the graphic is exported to an image processing application in step 52. The graphic component is separated in step 53 by applying it in the image processing application to a neutral colour which is not present within the component itself. The resulting file is referred to as a cleaned graphic component, which is reusable. A sample is shown in Fig. 5, in which the graphic component is a representation of a computer and a think bubble.

In step 54, the corresponding ATF, where applicable, is used to edit the graphic component in the cleaned graphic component to localize content and to accommodate differences in text size if required. This step is carried out while also viewing the corresponding screen shot.

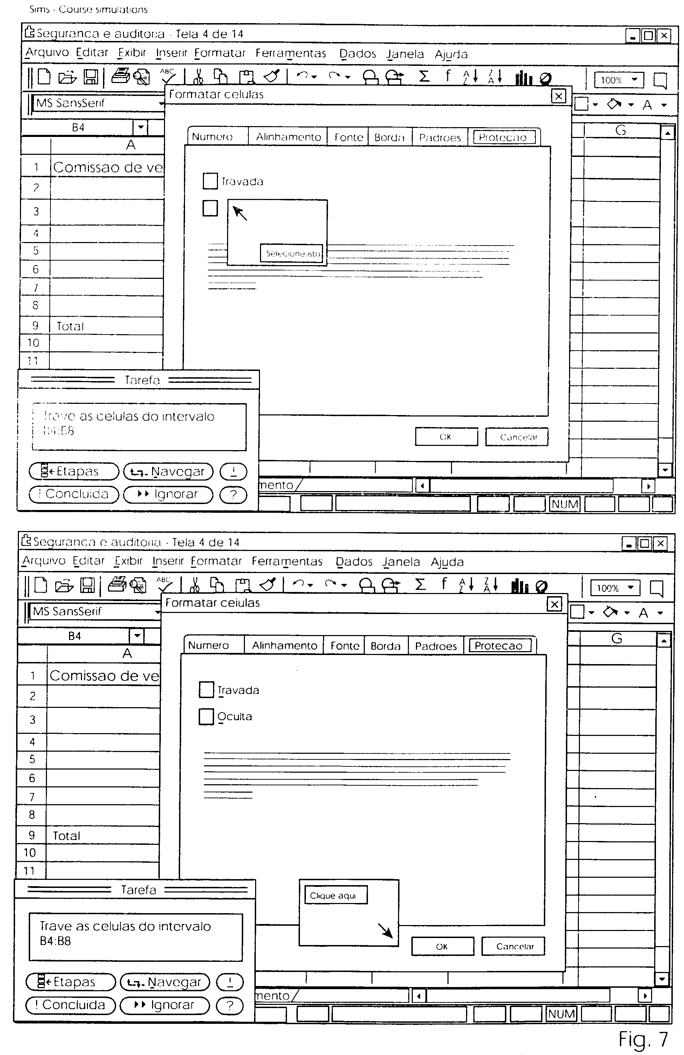

The edited graphic is in step 55 superimposed over the corresponding screen shot to produce a finalised graphics file for the screen. A sample is shown in Fig. 6, in which the graphic component of Fig. 5 is superimposed on a screen shot.

The transparency and grid for the target product is then set. For example, the required grid may be 10 x 10 and the translucency 75%. The position of the graphic in the screen shot is checked in the source product.

The graphic may be retrieved from a library instead of a cleaned graphic component. A library is a page containing regularly used graphics components. In many instances, localized text is applied to a graphic. The text may be from art text files or they may be words or phrases from an original source product graphic which were translated. Such translations are available in an ATF created during the evaluation phase. The relevant text is retrieved according to the naming convention for the target language, the collective title for the range of source products, and the specific source product code.

The text is copied into the text box and a desirable font, size, style, and alignment is chosen. Front screens are saved as DIBs in the source product. They are converted into PCXs. It is then converted to RGB mode.

Production of the final graphics file in step 55 may also involve localization of standard icons such as those indicating where a user should click in the target product. Such images are usually saved in DIB file format. The file is open in the graphics application and the text is cleaned off using a brush tool or other method. A correct translation is located in a database, and the relevant translated text is retrieved and may then be placed onto the icon.

An important aspect of all of the graphics processing is that the cultural issues files generated at the evaluation stage is referred to, to determine what additional editing is required.

### Technical Integration

The technical integration step 6 brings together the elements of the target product which have been developed, ensures that they operate correctly together, and performs quality assurance. The technical integration stage 6 includes an initial step 60 of importing finalised graphic files and translated text files which have been received from the translation facility. These files are imported into a technical integration workstation which is programmed with the generic program code for both the source and target products. This code executes with the localized target files because the same names are used for all screens and graphics. In step 61 the technical integrator indicates if the source product includes a simulation program. A simulation program is one which emulates operation of a foreign application. For example, if the source product is a computer based training application, the application which is the subject of the training may be simulated. If there is simulation, all simulation graphics requiring localization are selected for development by the technical integrator in steps 62 and 63. The workstation in step 64 is loaded with the application which is the source for the localized simulation screens. A workstation executes this source until the corresponding screen is displayed. This screen is shot in step 65 and stored in step 66 with the same naming convention as is present in the generic program code. As indicated by the step 67, the workstation proceeds with each simulation screen of the source product in turn until all of the required screen shots have been made from the local source. In step 68 the workstation executes the simulation program and edits the code which controls the screens with the foreign application. Examples of simulation screens are given in Fig. 7.

When each simulation program has been dealt with by the series of steps 62 to 68, in step 69 the workstation automatically tests consistency of screen and graphic references in the generic code. It does this by automatically reading each line of the program code in turn and locating references to screens and graphics. The following is an example of the code which is searched:-
Screen 1113
eff.exe a01_101.gif 86 443 0 1 0 15 15 15

For each reference such as "a01-101.gif" or "a02-202.dib" the workstation automatically searches the directory for this target product to determine if the corresponding graphic or screen is present. Any discrepancies are flagged with error messages to the technical integrator, who takes the appropriate action.

In step 70 the workstation executes the target product in design mode. The target product is a combination of the finalised graphic screen files, the imported text files, the generic program code, and simulations if present. At this stage some errors will arise. For example, there may be overlapping text boxes or text boxes may be too large. These errors are noted by the technical integrator and final editing is carried out by the originator of the error in step 71 to correct any of these errors.

Finally, in step 72 the technical integrator performs a final quality assurance review of all of the issues including the cultural issues which were flagged in the evaluation data files at the evaluation stage. The technical integrator is also responsible for ensuring that all language quality assurance issues are addressed.

It will be appreciated that the invention provides a comprehensive process for localizing source products which include a large number of graphics and electronic images. An important aspect is the fact that the process is broken into phases which provide appropriate milestones for quality assurance and work organisation. In this way, the complexity of localizing such source products can be dealt with in a controlled manner.

The invention is not limited to the embodiments described but may be varied in construction and detail within the scope of the claims.

## Claims

1. A process (1) for localizing a software source product to produce a target product, the process comprising the steps of:-
in an evaluation phase (2). generating text files which include only text strings of the source product, and generating graphics files which include graphic components of the source product and which have embedded text;
in a translation phase (4), translating the text files and text in the graphics files which were generated in the evaluation phase;
in a screen shooting phase (3), a workstation capturing images from a local source from the same language and cultural environment as the target product:
in a graphics processing stage (5) editing graphics of the source product with reference to the translated graphics files, and superimposing edited graphics on corresponding screen shots to produce final graphics files; and
in a technical integration phase (6), constructing and integrating the final graphics files, the translated text files, and generic program code for the source and target products to produce a target product.

2. A process as claimed in claim 1, wherein the source product is executed in a design mode in which file names and sequencing information for screens is automatically displayed.

3. A process as claimed in claims 1 or 2, wherein the evaluation phase (2) includes the additional steps of automatically carrying out a word count for text in the source product, automatically determining re-use of phrases, generating translation requirement data. and writing evaluation data to an evaluation data file.

4. A process as claimed in any preceding claim, wherein the evaluation phase (2) includes the additional step (25) of generating a storage structure for a server connected to the evaluation, screen shooting, graphics processing and technical integration workstations, the storage structure including a section for all target products of a particular language, and separate sections associated with phases of the process.

5. A process as claimed in any preceding claim, wherein the evaluation phase (2) includes the additional step of automatically evaluating audio and video content of the source product to determine the extent of language spoken as a word count and a real time duration, and writing the audio and video data to an evaluation data file.

6. A process as claimed in any preceding claim, wherein the technical integration (6) phase includes a separate method (62-67) for processing simulation programs of the source product, in which local source screens which correspond to simulation screens are shot, edited, and executed for quality control.

7. A process as claimed in any preceding claim, wherein the technical integration phase (6) includes the step of automatically validating graphics and screen files by searching through the target product code, identifying references to screens and graphics, and determining if they exist in a storage structure section for the target product.

8. A process as claimed in any preceding claim, wherein the technical integration phase includes the steps of executing the target product in a design mode and editing graphics which have inconsistencies as they appear on the screen.

9. A process as claimed in any preceding claim, wherein the technical integration phase includes the additional steps of performing a quality assurance analysis before final target product release.

10. A process substantially as described with reference to the accompanying drawings
